# EUROPEAN PATENT APPLICATION

(11) **EP 2 639 679 A1**
(43) Date of publication of application: **18.09.2013**
(21) Application number: 13171143.4
(22) Date of filing: 22.12.2006
(51) Int. Cl.: G06F 3/041, G06F 3/044

(54) **Integrated liquid crystal display and touchscreen for an electronic device**

(62) Divisional of application: 06127018.7
(71) Applicant: BlackBerry Limited, Waterloo ON N2L 3W8 (CA)
(72) Inventor: Ma, Zhongming, Waterloo, Ontario N2V 2A3 (CA); Hui, Edward, Waterloo, Ontario N2T 2J3 (CA); Lowles, Robert, Waterloo, Ontario N2T 2J5 (CA)
(74) Representative: Fennell, Gareth Charles

(57) **Abstract**

An integrated display for an electronic device, comprising: a liquid crystal display having a first polarizing layer coupled to a colour filter layer; and, a first transparent conductive material layer disposed between the first polarizing layer and the colour filter layer to thereby form a capacitive touchscreen sensor.

## Description

This application relates generally to the field of displays for electronic devices, and more specifically, to liquid crystal displays with touchscreens for handheld electronic devices.

Numerous types of handheld electronic devices are known. Examples of such handheld electronic devices include personal data assistants ("PDAs"), handheld computers, two-way pagers, cellular telephones, and the like. Many handheld electronic devices also feature wireless communication capability, although many such handheld electronic devices are stand-alone devices that are functional without communication with other devices.

Such handheld electronic devices are generally intended to be portable, and thus are of a relatively compact configuration in which keys and other input structures often perform multiple functions under certain circumstances or may otherwise have multiple aspects or features assigned thereto. With advances in technology, handheld electronic devices are built to have progressively smaller form factors yet have progressively greater numbers of applications and features resident thereon. As a practical matter, the keys of a keypad can only be reduced to a certain small size before the keys become relatively unusable. In order to enable text entry, however, a keypad must be capable of entering all twenty-six letters of the Latin alphabet, for instance, as well as appropriate punctuation and other symbols.

In addition to using keys on a keypad, handheld electronic devices may also use touchscreens (also referred to as touch screens, touch panels, touchscreen panels, or touchscreen sensors). A touchscreen is a display overlay which provides the ability to display and receive information on the same display screen. The effect of the overlay is to allow a display to be used as an input device, possibly removing the keys on the keypad as the primary input device for interacting with the display's content. Displays with integrated touchscreens can make computers and handheld electronic devices more useable. A touchscreen or touchscreen system typically includes a touch sensor (the touchscreen overlay, sensor, or panel), a controller, and accompanying software. The touchscreen controller communicates user selections to the processor of the electronic device in which the touchscreen is used.

There are a number of different touchscreen technologies including the following: capacitive, resistive, surface wave, infrared, strain gauge, optical imaging, dispersive signal, and acoustic pulse recognition. In particular, one type of capacitive touchscreen has a glass panel or sensor that is coated with a material, typically indium tin oxide ("ITO"), that conducts an electrical current across the sensor. As such, the sensor has a controlled field of stored electrons in both the horizontal and vertical axes, that is, it exhibits capacitance. The human body is also an electrical device which has stored electrons and therefore also exhibits capacitance. When the sensor's "normal" capacitance field (i.e., its reference state or field) is altered by another capacitance field, a user's finger for example, electronic circuits located at each corner of the panel measure the resultant "distortion" in the sine wave characteristics of the reference field and send the information about the event to the controller for mathematical processing to determine the x and y coordinates of the touch. Of course, there are other types of capacitive touchscreens that may employ patterns in the ITO, that do not use corner sensors, etc. In general, capacitive touchscreens must be touched with a conductive device being held by a bare hand or with a finger, unlike resistive and surface wave panels that can use anything that can point, such as a finger or stylus. Typically, capacitive touchscreens are not affected by outside elements and generally have relatively high clarity.

Now, the display screen or display of a handheld electronic device is typically a liquid crystal display ("LCD"). For reference, a LCD is made with either a passive matrix or an active matrix display grid. The active matrix LCD is also known as a thin film transistor ("TFT") display. The passive matrix LCD has a grid of conductors with pixels located at each intersection in the grid. A current is sent across two conductors on the grid to control the luminescence of each pixel. An active matrix has a transistor located at each pixel intersection, requiring less current to control the luminance of a pixel. For this reason, the current in an active matrix display can be switched on and off more frequently, improving the screen refresh time (e.g., a cursor will appear to move more smoothly across the screen). In color LCDs each individual pixel is divided into three cells, or subpixels, which are coloured red, green, and blue, respectively, by additional filters (e.g., pigment filters, dye filters and metal oxide filters). Each subpixel can be controlled independently to yield thousands of possible colors for each pixel.

LCDs can be either transmissive or reflective, depending on the location of the light source. A transmissive LCD is illuminated from the back by a backlight and viewed from the opposite side (i.e., the front). This type of LCD is used in applications requiring high luminance levels such as computer displays, televisions, personal digital assistants, mobile telephones, and other handheld electronic devices. The illumination device used to illuminate the LCD in such a product usually consumes much more power than the LCD itself. Reflective LCDs, often found in digital watches and calculators, are illuminated by external light reflected by a reflector located behind the display. This type of LCD can produce darker "blacks" than the transmissive type since light must pass through the liquid crystal layer twice and thus is attenuated twice. Because the reflected light is also attenuated twice in the translucent parts of the display image, however, contrast is usually poorer than in a transmissive display. The absence of a lamp significantly reduces power consumption, allowing for longer battery life in battery-powered devices.

A typical transmissive TFT LCD display consists of a number of layers. These layers may include the following (from top to bottom): a colour filter polarizer layer (e.g., a horizontal polarizer); a colour filter glass layer or substrate (i.e., a front glass having red, green, and blue filters); an indium tin oxide ("ITO") layer formed on the bottom of the colour filter glass layer; a liquid crystal layer; a TFT glass layer or substrate (i.e., a TFT-matrix layer formed on the top of a rear glass); a TFT polarizer layer (e.g., a vertical polarizer); and, a backlight layer (or a reflector layer for a reflective display).

Now, the display for a handheld wireless device having touchscreen capability will typically consist of a separate touchscreen (or touch panel) placed over top of a LCD display. This combination may be referred to as a LCD touchscreen. However, in handheld electronic devices where size and power consumption are critical factors, this display configuration has several disadvantages. In particular, the additional touchscreen takes up much needed space within the device and cuts down on light transmission from the LCD display hence increasing power consumption of the device (i.e., for the backlight) to improve visibility of the LCD display.

A need therefore exists for an improved touchscreen for handheld and other electronic devices having LCD displays. Accordingly, a solution that addresses, at least in part, the above and other shortcomings is desired.

### BRIEF DESCRIPTION OF THE DRAWINGS

Features and advantages of the embodiments of the present application will become apparent from the following detailed description, taken in combination with the appended drawings, in which:

FIG. 1 is a top view of a handheld electronic device in accordance with an embodiment of the application;

FIG. 2 is a block diagram illustrating a processing system for the handheld electronic device of FIG. 1;

FIG. 3 is a side view illustrating an integrated LCD and touchscreen display in accordance with an embodiment of the application; and,

FIG. 4 is a side view illustrating an alternate integrated LCD and touchscreen display in accordance with an embodiment of the application.

It will be noted that throughout the appended drawings, like features are identified by like reference numerals.

### GENERAL

In the following description, details are set forth to provide an understanding of the application. In some instances, certain software, circuits, structures and techniques have not been described or shown in detail in order not to obscure the application. Embodiments of the present application may be implemented in any computer programming language provided that the operating system of the data processing system provides the facilities that may support the requirements of the application. Any limitations presented would be a result of a particular type of operating system or computer programming language and would not be a limitation of the present application.

The present application may provide a display for a handheld electronic device, and other devices, in which a touchscreen sensor is integrated into a liquid crystal display ("LCD").

According to one embodiment, there may be provided an integrated display for an electronic device, comprising: a liquid crystal display having a first polarizing layer coupled to a colour filter layer; and, a first transparent conductive material layer disposed between the first polarizing layer and the colour filter layer to thereby form a capacitive touchscreen sensor.

According to another embodiment, there may be provided an integrated display for an electronic device, comprising: a liquid crystal display having a protective lens coupled to a first polarizing layer; and, a first transparent conductive material layer disposed between the protective lens and the first polarizing layer to thereby form a capacitive touchscreen sensor.

According to further embodiments, there may be provided apparatus such as a handheld electronic device, methods for adapting the device, as well as articles of manufacture such as a computer readable medium having program instructions recorded therein for practising the methods of the application.

### DESCRIPTION OF PREFERRED EMBODIMENTS

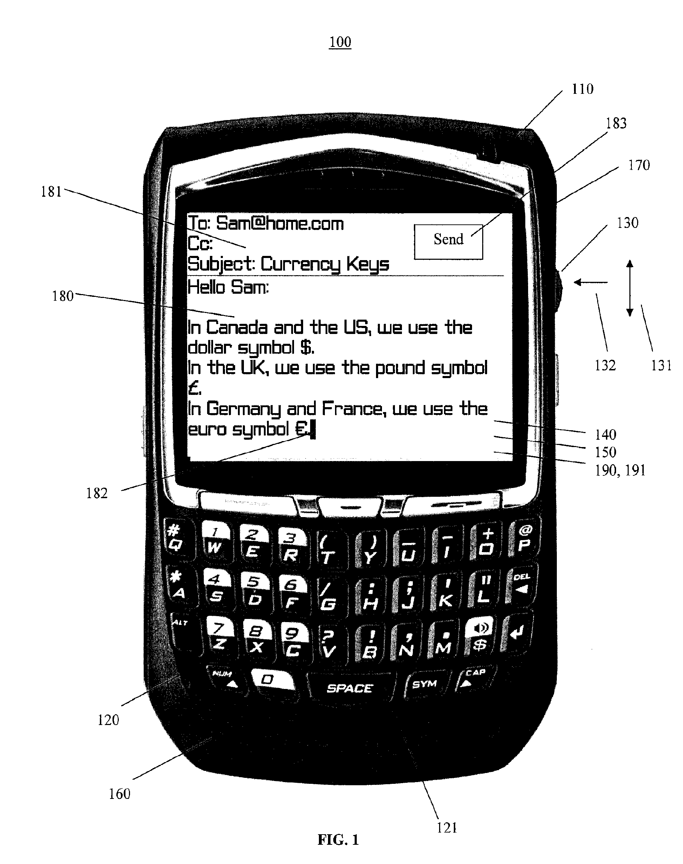

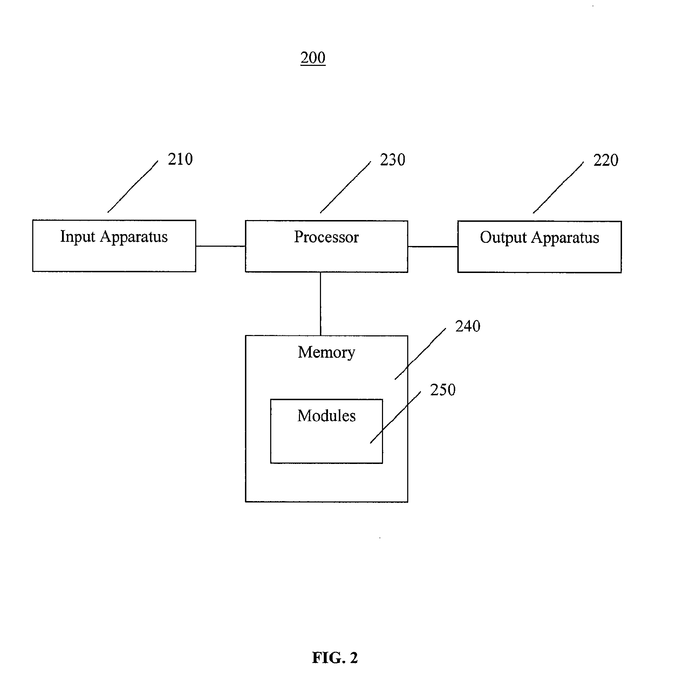

FIG. 1 is a top view of a handheld electronic device 100 in accordance with an embodiment of the application. And, FIG. 2 is a block diagram illustrating a processing system 200 for the handheld electronic device 100 of FIG. 1. The exemplary handheld electronic device 100 includes a housing 110 in which is disposed a processing system 200 that includes an input apparatus 210, an output apparatus 220, a processor 230, memory 240, and one or more hardware and/or software modules 250. The processor 230 may be, for example and without limitation, a microprocessor and is responsive to inputs from the input apparatus 210 and provides output signals to the output apparatus 220. The processor 230 also interfaces with the memory 240.

The handheld electronic device 100 may be a two-way communication device having voice and/or advanced data communication capabilities, including the capability to communicate with other computer systems. Depending on the functionality provided by the device 100, it may be referred to as a data messaging device, a two-way pager, a cellular telephone with data messaging capabilities, a wireless Internet appliance, a data communication device (with or without telephony capabilities), a wireless fidelity ("Wi-Fi") device, or a wireless local area network ("WLAN") device.

As can be understood from FIGS. 1 and 2, the input apparatus 210 includes a keypad 120, a thumbwheel 130, and a touchscreen 140. The keypad 120 is in the exemplary form of a QWERTY keyboard including a plurality of keys 121 that serve as input members. It is noted, however, that the keypad 120 may be of other configurations, such as an AZERTY keyboard, a reduced QWERTY keyboard, or other keyboard arrangement, whether presently known or unknown, and either reduced or not reduced.

According to one embodiment, the keys 121 and touchscreen 140 are located on a front face 160 of the housing 110, and the thumbwheel 130 is located at a side 170 of the housing 110. In addition to the keys 121, the thumbwheel 130 can serve as another input member since the thumbwheel 130 is capable of being rotated, as indicated by arrow 131, and depressed generally toward the housing 110, as indicated by arrow 132. Rotation of the thumbwheel 130 provides selection inputs to the processor 230, while depression of the thumbwheel 130 provides another selection input to the processor 230.

The output apparatus 220 includes a display 150 upon which can be provided an output 180. An exemplary output 180 is depicted on the display 150 in FIG. 1. The exemplary output 180 is a text message 181 that includes one or more characters or symbols. The text message 181 may be an email message and may be composed by a user using the various keys 121 on the keypad 120. The output 180 also includes a cursor 182 that depicts generally where the next character, symbol, etc., will be displayed. The display 150 has associated circuitry and a controller or processor (e.g., 230, 240, 250) for receiving information from the processor of the handheld electronic device 100 for presentation.

Also shown on the display 150 as part of output 180 is a button icon 183. The button icon 183 may be touched by a user to generate an input through operation of the touchscreen 140. Here, by touching the button icon 183, an input may be sent to the processor 230 to initiate the sending of the text message 181. The touchscreen (or touchscreen sensor) 140 has associated circuitry and a controller or processor (e.g., 230, 240, 250) for determining where the user's touch was made on the touchscreen sensor 140 and for sending the coordinates of the touch to the processor of the handheld electronic device 100 to determine a corresponding operation (e.g., the sending of the text message 181). In this way, the handheld electronic device 100 supports touchscreen functionality.

The memory 240 is depicted schematically in FIG. 2. The memory 240 can be any of a variety of types of internal and/or external storage media such as, without limitation, RAM, ROM, EPROM(s), EEPROM(s), and the like that provide registers for data storage such as in the fashion of an internal storage area of a computer, and can be volatile memory or non-volatile memory. As can be seen from FIG. 2, the memory 240 is in electronic communication with the processor 230. The memory 240 additionally includes a number of modules depicted generally with the numeral 250 for the processing of data. The modules 250 can be in any of a variety of forms such as, without limitation, software, firmware, hardware, and the like. As will be explained in greater detail below, the one or more modules 250 may be executed or operated to perform the method of the present application as well as other functions that are utilized by the handheld electronic device 100. Additionally, the memory 240 can also store a variety of databases such as, without limitation, a language database, etc.

Thus, the handheld electronic device 100 includes computer executable programmed instructions for directing the device 100 to implement the embodiments of the present application. The programmed instructions may be embodied in one or more modules 250 resident in the memory 240 or processing system 200 of the device 100. Alternatively, the programmed instructions may be embodied on a computer readable medium (such as a CD disk or floppy disk) which may be used for transporting the programmed instructions to the memory 240 of the device 100. Alternatively, the programmed instructions may be embedded in a computer-readable signal or signal-bearing medium that is uploaded to a network by a vendor or supplier of the programmed instructions, and this signal or signal-bearing medium may be downloaded through an interface (e.g., 210) to the device 100 from the network by end users or potential buyers.

As mentioned above, the present application provides a display 190, 191 for a handheld electronic device 100, and other devices, in which a touchscreen sensor 140 is integrated into a liquid crystal display ("LCD") 150. According to one embodiment, the display 190, 191 is a liquid crystal display ("LCD") 150 into which the touchscreen or touchscreen sensor 140 is integrated. According to one embodiment, the touchscreen sensor 140 is a capacitive sensor and the LCD 150 is of the transmissive thin film transistor ("TFT") type.

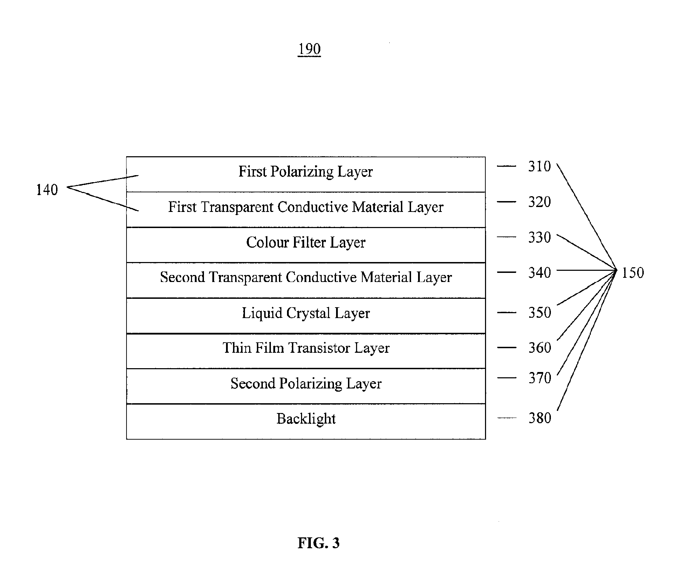

FIG. 3 is a side view illustrating an integrated LCD and touchscreen display 190 in accordance with an embodiment of the application. In FIG. 3, control circuitry is not shown. The display 190 includes the following layers (from top to bottom): a colour filter polarizer layer (e.g., a horizontal polarizer) 310; a first indium tin oxide ("ITO") layer (i.e., a transparent conductive material layer) 320; a colour filter glass layer or substrate (i.e., a front glass having red, green, and blue filters) 330; a second ITO layer formed on the bottom of the colour filter glass layer 340; a liquid crystal layer 350; a TFT glass layer or substrate(i.e., a TFT-matrix layer formed on the top of a rear glass) 360; a TFT polarizer layer (e.g., a vertical polarizer) 370; and, a backlight layer (or a reflector layer for a reflective display) 380.

The addition of the first ITO layer 320 between the colour filter layer 330 and polarizer 310 forms an integrated touchscreen sensor 140 for the display 190. The ITO deposition for the first ITO layer 320 may be performed on either the bottom of the polarizer layer 310 or the top of the colour filter layer 330.

The integrated touchscreen sensor 140 removes the need for a separate touch panel layer (and air gap) to be added above the polarizer of a traditional LCD display. Because the light from the backlight layer 380 does not have to cross an air to glass boundary as would be the case if a separate touchscreen panel or sensor were used, the transmissivity of the integrated display 190 is increased and the amount of backlight power needed is reduced. Also, since the ITO layer 320 is deposited directly on a layer (310 or 330) that is required for LCD functionality, the height of the integrated display 190 (i.e., its stack-up) is not increased.

To enable the touchscreen 140 to work properly, the driver or controller (e.g., 230, 240, 250) for the touchscreen must synchronize the scanning of the touchscreen layer (i.e., the first ITO layer 320) to that of the LCD layers (i.e., the second ITO layer 340 and the TFT layer 360) to reduce electrical interference effects. One way to accomplished this is by having the scanning logic for the LCD layers 340, 360 also scan the touchscreen layer 320. The scanning logic may be implemented in software, firmware, or hardware (e.g., 230, 240, 250).

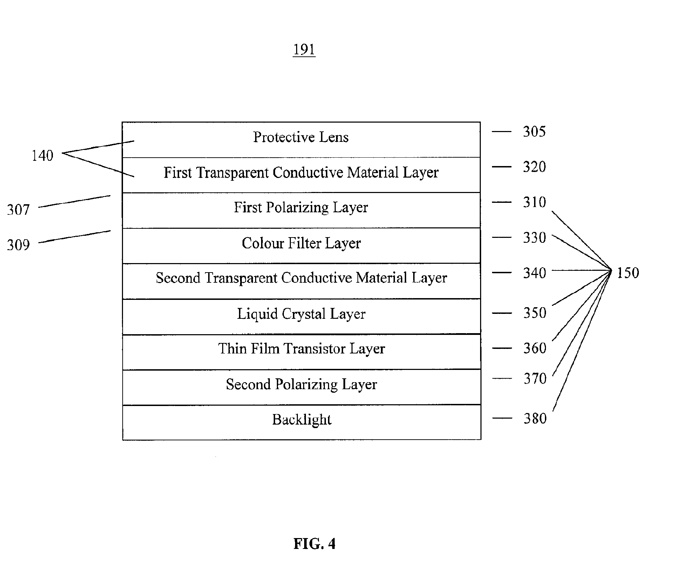

FIG. 4 is a side view illustrating an alternate integrated LCD and touchscreen display 191 in accordance with an embodiment of the application. In FIG. 4, control circuitry is not shown. The display 191 includes the following layers (from top to bottom): a protective lens cover layer 305; a first indium tin oxide ("ITO") layer (i.e., a transparent conductive material layer) 320; a colour filter polarizer layer (e.g., a horizontal polarizer) 310; a colour filter glass layer (i.e., a front glass having red, green, and blue filters) 330; a second ITO layer formed on the bottom of the colour filter glass layer 340; a liquid crystal layer 350; a TFT glass layer (i.e., a TFT layer formed on the top of a rear glass) 360; a TFT polarizer layer (e.g., a vertical polarizer) 370; and, a backlight layer (or a reflector layer for a reflective display) 380.

In the alternate integrated display 191 of FIG. 4, the first ITO layer 320 is added to the bottom of a protective lens cover 305 that is placed over the top of the LCD display layers (i.e., 310, 330-380). The addition of the first ITO layer 320 to the bottom of the protective lens cover 305 (i.e., between the protective lens cover 305 and the polarizer 310) forms an integrated touchscreen sensor 140 for the display 190.

The alternate display 191 of FIG. 4 may be used in implementations where it is not desirable to expose the polarizer layer 310 directly to the user (such as for creating a flush mounted look for the display 191 or for harsh environmental conditions).

In FIG. 4, the LCD display layers (i.e., 310, 330-380) are positioned directly underneath the lens cover 305, 320. There may or may not be a small air gap (i.e., at 307) between the two (i.e., the air gap is optional). In this alternate embodiment, the touch panel or touchscreen sensor 140 (i.e., the first ITO layer 320) is integrated with the protective lens cover 305 to reduce the overall number of layers and resulting overall height of the display's stack-up. If a sufficient air gap exists, then the scanning of the touchscreen layer (i.e., the first ITO layer 320) does not need to be synchronized with the scanning of the LCD layers (i.e., the second ITO layer 340 and the TFT layer 360). Otherwise, the scanning of the two must be synchronized as with the integrated display 190 of FIG. 3.

According to one embodiment, a layer of optical adhesive is provided (i.e., at 307) between the protective lens 305 and the first polarizing layer 310. An air gap (i.e., at 307) between the protective lens 305 and the first polarizing layer 310 reduces optical performance. The optical adhesive improves the optical performance of the integrated display 191 by reducing or eliminating the air gap (i.e., at 307).

According to one embodiment, the capacitive sensor 140 includes a third ITO layer (i.e., a transparent conductive material layer) disposed between (i.e., at 309) the first polarizing layer 310 and the colour filter layer 330. In this embodiment, the first ITO layer 320 is disposed on the bottom surface of the protective lens 305 while the third ITO layer is disposed on the upper surface of the colour filter layer 330. The first polarizing layer 310 forms an insulator/dielectric for the capacitive sensor 140 between the first and third ITO layers.

According to one embodiment, each ITO layer (e.g., 320)is a transparent conductive material layer. The transparent conductive material may be a conducting oxide such as ITO, titanium oxide ("TiO"), nickel oxide ("NiO"), zinc oxide ("ZnO"), etc.

According to one embodiment, the integrated display 190, 191 is a black and white display (i.e., a monochrome display rather than a colour display). According to one embodiment, the integrated display 190, 191 is for installation in a device other than a handheld electronic device 100 (e.g., a computer monitor, a television screen, etc.). According to one embodiment, the touchscreen sensor 140 is or includes a resistive sensor. According to one embodiment, the display 190, 191 is a passive matrix LCD rather than an active matrix LCD. According to one embodiment, the display 190, 191 is a reflective display rather than a transmissive display. According to one embodiment, the first ITO layer 320 includes materials in addition to ITO to alter characteristics of the layer such as resistivity. And, according to one embodiment, the protective lens 305 is composed of acrylic, polycarbonate, or glass and is approximately 0.3 to 0.8 mm thick.

The embodiments of the application provide several advantages. First, the integrated display 190, 191 reduces the overall height of existing touchscreen and LCD combinations. Second, the integrated display 190, 191 increases light transmission and hence reduces overall power consumption as compared to existing touchscreen and LCD combinations. Third, the integrated display 190, 191 does not require a separate touchscreen and hence an additional air gap between the separate touchscreen and the LCD is avoided. Fourth, the alternative integrated display 191 does not introduce (except optionally) an air gap between the protective lens cover 305 and the LCD 150. Fifth, elimination of the air gap by the adhesive layer (i.e., at 307) reduces loss of reflected/transmitted light.

Thus, according to one embodiment, there is provided an integrated display 190 for an electronic device (e.g., 100), comprising: a liquid crystal display 150 having a first polarizing layer 310 coupled to a colour filter layer 330; and, a first transparent conductive material layer 320 disposed between the first polarizing layer 310 and the colour filter layer 330 to thereby form a capacitive touchscreen sensor 140. The first transparent conductive material layer 320 may be disposed on an upper surface of the colour filter layer 330. The colour filter layer 330 may have one or more colour filters disposed on a lower surface thereof. The liquid crystal display 150 may further include: a second transparent conductive material layer 340 formed on a lower surface of the colour filter layer 330 and acting as a common electrode for thin film transistors disposed on an upper surface of a thin film transistor layer 360; a liquid crystal layer 350 disposed between the second transparent conductive material layer 340 and the thin film transistor layer 360, each thin film transistor on the thin film transistor layer 360 being selectable to apply a voltage across the liquid crystal layer 340 to activate liquid crystals for a respective pixel; a second polarizing layer 370 coupled to a lower surface of the thin film transistor layer 360; and, a backlight 380 for illuminating the integrated display 190 through a lower surface of the second polarizing layer 370. The integrated display 190 may further include a first module (e.g., 230, 240, 250) for controlling activation of the thin film transistors to thereby present images on the integrated display 190. The integrated display 190 may further include a second module (e.g., 230, 240, 250) for monitoring the capacitive touchscreen sensor 140 for changes in capacitance caused by a touch of a user and for determining a location of the touch from the changes in capacitance. The monitoring by the second module may be synchronized with the controlling of the first module to thereby reduce electrical interference. The electronic device may be a handheld electronic device 100. The colour filter layer 330 may be composed of glass or plastic. One of the backlight 380 and the thin film transistor layer 360 may be a reflector. The transparent conductive material may include a conducting oxide. And, the conducting oxide may include one or more of indium tin oxide, titanium oxide, nickel oxide, zinc oxide, indium, tin, nickel, and zinc.

Also, according to another embodiment, there is provided an integrated display 191 for an electronic device (e.g., 100), comprising: a liquid crystal display 150 having a protective lens 305 coupled to a first polarizing layer 310; and, a first transparent conductive material layer 320 disposed between the protective lens 305 and the first polarizing layer 310 to thereby form a capacitive touchscreen sensor 140. The first transparent conductive material layer 320 may be disposed on a lower surface of the protective lens 305. The liquid crystal display 150 may further include: a colour filter layer 330 coupled to a lower surface of the first polarizing layer 310; a second transparent conductive material layer 340 formed on a lower surface of the colour filter layer 330 and acting as a common electrode for thin film transistors disposed on an upper surface of a thin film transistor layer 360; a liquid crystal layer 350 disposed between the second transparent conductive material layer 340 and the thin film transistor layer 360, each thin film transistor on the thin film transistor layer 360 being selectable to apply a voltage across the liquid crystal layer 350 to activate liquid crystals for a respective pixel; a second polarizing layer 370 coupled to a lower surface of the thin film transistor layer 360; and, a backlight 380 for illuminating the integrated display through a lower surface of the second polarizing layer. The colour filter layer 330 may have one or more colour filters disposed on the lower surface thereof. The integrated display may further include a first module (e.g., 230, 240, 250) for controlling activation of the thin film transistors to thereby present images on the integrated display 191. The integrated display may further include a second module (e.g., 230, 240, 250) for monitoring the capacitive touchscreen sensor 140 for changes in capacitance caused by a touch of a user and for determining a location of the touch from the changes in capacitance. The monitoring by the second module may be synchronized with the controlling of the first module to thereby reduce electrical interference. The electronic device may be a handheld electronic device 100. The colour filter layer 330 may be composed of glass or plastic. One of the backlight 380 and the thin film transistor layer 360 may be a reflector. The transparent conductive material may include a conducting oxide. The conducting oxide may include one or more of indium tin oxide, titanium oxide, nickel oxide, zinc oxide, indium, tin, nickel, and zinc. The protective lens 305 may be bounded to the first polarizing layer 310 with an adhesive layer to thereby reduce air gaps (i.e., at 307) between the protective lens 305 and the first polarizing layer 310. And, the liquid crystal display 150 may have a colour filter layer 330 coupled to a lower surface of the first polarizing layer 310 and the capacitive sensor 140 may include a third transparent conductive material layer (i.e., at 309) disposed between the first polarizing layer 310 and the colour filter layer 330.

While embodiments of this application are primarily discussed as a device, a person of ordinary skill in the art will understand that the apparatus discussed above with reference to a handheld electronic device 100, may be programmed to enable the operation of these embodiments. Moreover, an article of manufacture for use with a handheld electronic device 100, such as a pre-recorded storage device or other similar computer readable medium including program instructions recorded thereon, may direct the device 100 to facilitate the operation of these embodiments. It is understood that such computer program products, systems, apparatus, and articles of manufacture also come within the scope of the application.

Aspects and features of the present disclosure are set forth in the following numbered clauses which contain the subject matter of the claims of the parent application as filed.
1. An integrated display for an electronic device, comprising:
   a liquid crystal display having a first polarizing layer coupled to a colour filter layer; and,
   a first transparent conductive material layer disposed between the first polarizing layer and the colour filter layer to thereby form a capacitive touchscreen sensor.
2. The integrated display of clause 1 wherein the first transparent conductive material layer is disposed on an upper surface of the colour filter layer.
3. The integrated display of clause 2 wherein the colour filter layer has one or more colour filters disposed on a lower surface thereof.
4. The integrated display of any one of clauses 1 to 3 wherein the liquid crystal display further comprises: a second transparent conductive material layer formed on a lower surface of the colour filter layer and acting as a common electrode for thin film transistors disposed on an upper surface of a thin film transistor layer; a liquid crystal layer disposed between the second transparent conductive material layer and the thin film transistor layer, each thin film transistor on the thin film transistor layer being selectable to apply a voltage across the liquid crystal layer to activate liquid crystals for a respective pixel; a second polarizing layer coupled to a lower surface of the thin film transistor layer; and, a backlight for illuminating the integrated display through a lower surface of the second polarizing layer.
5. The integrated display of clause 4 and further comprising a first module for controlling activation of the thin film transistors to thereby present images on the integrated display.
6. The integrated display of clause 5 and further comprising a second module for monitoring the capacitive touchscreen sensor for changes in capacitance caused by a touch of a user and for determining a location of the touch from the changes in capacitance.
7. The integrated display of clause 6 wherein the monitoring by the second module is synchronized with the controlling of the first module to thereby reduce electrical interference.
8. The integrated display of any one of the preceding clauses wherein the electronic device is a handheld electronic device.
9. The integrated display of any one of the preceding clauses wherein the colour filter layer is composed of glass or plastic.
10. The integrated display of clause 4 wherein one of the backlight and the thin film transistor layer is a reflector.
11. The integrated display of any one of the preceding clauses wherein the transparent conductive material comprises a conducting oxide.
12. The integrated display of clause 11 wherein the conducting oxide comprises one or more of indium tin oxide, titanium oxide, nickel oxide, zinc oxide, indium, tin, nickel, and zinc.
13. An integrated display for an electronic device, comprising:
   a liquid crystal display having a protective lens coupled to a first polarizing layer; and,
   a first transparent conductive material layer disposed between the protective lens and the first polarizing layer to thereby form a capacitive touchscreen sensor.
14. The integrated display of clause 13 wherein the first transparent conductive material layer is disposed on a lower surface of the protective lens.
15. The integrated display of clause 13 or clause 14 wherein the liquid crystal display further comprises: a colour filter layer coupled to a lower surface of the first polarizing layer; a second transparent conductive material layer formed on a lower surface of the colour filter layer and acting as a common electrode for thin film transistors disposed on an upper surface of a thin film transistor layer; a liquid crystal layer disposed between the second transparent conductive material layer and the thin film transistor layer, each thin film transistor on the thin film transistor layer being selectable to apply a voltage across the liquid crystal layer to activate liquid crystals for a respective pixel; a second polarizing layer coupled to a lower surface of the thin film transistor layer; and, a backlight for illuminating the integrated display through a lower surface of the second polarizing layer.
16. The integrated display of clause 15 wherein the colour filter layer has one or more colour filters disposed on the lower surface thereof.
17. The integrated display of clause 15 or clause 16 and further comprising a first module for controlling activation of the thin film transistors to thereby present images on the integrated display.
18. The integrated display of clause 17 and further comprising a second module for monitoring the capacitive touchscreen sensor for changes in capacitance caused by a touch of a user and for determining a location of the touch from the changes in capacitance.
19. The integrated display of clause 18 wherein the monitoring by the second module is synchronized with the controlling of the first module to thereby reduce electrical interference.
20. The integrated display of any one of clauses 13 to 19 wherein the electronic device is a handheld electronic device.
21. The integrated display of any one of clauses 13 to 20 wherein the colour filter layer is composed of glass or plastic.
22. The integrated display of clause 15 wherein one of the backlight and the thin film transistor layer is a reflector.
23. The integrated display of any one of clauses 13 to 22 wherein the transparent conductive material comprises a conducting oxide.
24. The integrated display of clause 25 wherein the conducting oxide comprises one or more of indium tin oxide, titanium oxide, nickel oxide, zinc oxide, indium, tin, nickel, and zinc.
25. The integrated display of any one of clauses 13 to 24 wherein the protective lens is bounded to the first polarizing layer with an adhesive layer to thereby reduce air gaps between the protective lens and the first polarizing layer.
26. The integrated display of clause 25 wherein the liquid crystal display has a colour filter layer coupled to a lower surface of the first polarizing layer and wherein the capacitive sensor comprises a third transparent conductive material layer disposed between the first polarizing layer and the colour filter layer.

The embodiments of the application described above are intended to be exemplary only. Those skilled in this art will understand that various modifications of detail may be made to these embodiments, all of which come within the scope of the application.

## Claims

1. An integrated display (190) for an electronic device (100) comprising:
a liquid crystal display (150);
capacitive touch sensors (320) disposed in a layer above the liquid crystal display;
a controller (230, 240, 250) coupled to the touch sensors and arranged to synchronize scanning of the touch sensors with scanning of the liquid crystal display.

2. The integrated display of claim 1, wherein the controller controls scanning of the touch sensors and controls scanning of the liquid crystal display.

3. The integrated display of claim 1, wherein the liquid crystal display comprises liquid crystal (350) disposed between common electrodes (340) and thin film transistors (360), and wherein the controller is coupled to the common electrodes and the thin film transistors to control scanning of the liquid crystal display.

4. The integrated display of claim 1, wherein the touch sensors are disposed between a polarizer (310) and a colour filter (330).

5. The integrated display of claim 1, wherein the touch sensors are disposed between a cover (305) and a colour filter (330).

6. The integrated display of claim 1, wherein the touch sensors are deposited on a colour filter.

7. The integrated display of claim 1, wherein the liquid crystal display comprises liquid crystal (350) disposed between common electrodes (340) and thin film transistors (360), and wherein the controller is coupled to the common electrodes and the thin film transistors to control activation of the thin film transistors to display images and the controller is coupled to the touch sensors to detect touches on the integrated display.

8. The integrated display of any one of the preceding claims, wherein the touch sensors comprise a conductive oxide.

9. The integrated display of claim 1, wherein the touch sensors are deposited on a cover of the integrated display.

10. The integrated display of claim 1, wherein the touch sensors are deposited on a polarizer.

11. The integrated display of claim 1, wherein the controller monitors the touch sensors for changes in capacitance and determines a location of a touch from the changes in capacitance.

12. The integrated display of claim 1, wherein the scanning is synchronized with activation of thin film transistors.

13. The integrated display of claim 1, wherein the scanning is synchronized with activation of thin film transistors to reduce electrical interference between the touch sensors and the thin film transistors.
